(19)

Europäisches
Patentamt
European
Patent Office
Office européen
des brevets

(11)  **EP 2 483 350 B1**

(12)  **EUROPEAN PATENT SPECIFICATION**

(45) Date of publication and mention
of the grant of the patent:
**10.12.2014   Bulletin 2014/50**

(21) Application number: **10760614.7**

(22) Date of filing: **28.09.2010**

(51) Int Cl.:
*C08L 23/14* (2006.01)          *B32B 27/32* (2006.01)
*B32B 27/28* (2006.01)          *B32B 27/08* (2006.01)

(86) International application number:
**PCT/EP2010/005910**

(87) International publication number:
**WO 2011/038886 (07.04.2011 Gazette 2011/14)**

(54) **MULTI-LAYERED ARTICLE**

MEHRSCHICHTIGER ARTIKEL

ARTICLE MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.10.2009   EP 09012478**

(43) Date of publication of application:
**08.08.2012   Bulletin 2012/32**

(73) Proprietor: **Borealis AG
1220 Vienna (AT)**

(72) Inventors:
• **JOHANSEN, Geir, Morten
N-3943 Porsgrunn (NO)**
• **KONA, Rao, Balakantha
Abu Dhabi (AE)**
• **ØYSÆD, Harry
N-3960 Stathelle (NO)**

(74) Representative: **Kador & Partner
Corneliusstraße 15
80469 München (DE)**

(56) References cited:
**WO-A1-00/63085          WO-A1-96/22328
WO-A1-02/059196**

• **DATABASE WPI Week 200036 Thomson
Scientific, London, GB; AN 2000-415855
XP002566010 -& JP 2000 143903 A (MITSUBISHI
CHEM CORP) 26 May 2000 (2000-05-26) cited in
the application**

Remarks:
The file contains technical information submitted after
the application was filed and not included in this
specification

**Description**

The present invention relates to a multi-layered article comprising a layer (a) comprising polar polymers selected from polyamide (PA), poly(vinyl alcohol) copolymers (PVOH), ethylene vinyl alcohol copolymers (EVOH) and a polypropylene layer (b) in which a propylene copolymer (A) is blended with a propylene polymer (B) chemically modified with at least one polar monomer which has a melt flow rate at a load of 2.16 kg at a H temperature of 190°C of 300-1000 g/10 min.

Plastic based packaging, for example medical packaging or food and drink packaging, can be made of polyolefins.

Polyolefins, such as polypropylene provide excellent heat resistance and are readily mouldable to provide rigid containers offering good impact resistance. These materials also prove excellent water and water vapour resistance, preventing moisture uptake of packaged goods.

A drawback of polypropylene packaging however is that it provides limited protection against oxygen, carbon dioxide, liquid and volatile hydrocarbon permeation, which in turn can lead to rapid deterioration of perishable products, such as medicine and food and drink products contained therein.

This problem is normally overcome by providing polypropylene constructions with additional barrier layers - usually constructed of other polymers - which provide a barrier function against oxygen carbon dioxide, liquid and volatile hydrocarbon permeation.

However, since these other polymers - typical examples are ethylene vinyl alcohol (EVOH), polyamide (nylon, PA) - are much more polar than polypropylene, the layers lack compatibility and extra adhesive layers are required to adhere the polypropylene and the barrier layers.

Accordingly in order to provide polypropylene packaging suitable for medicine and food and drink products a number of polypropylene layers and barrier layers have to be adhered together, by application of further, separate adhesive layers.

For example if both outer surfaces of a final multi-layered construction need to be polypropylene - as it is the case for food or medical packaging - the multi-layered construction including one barrier layer has at least five separate layers (polypropylene / adhesive / barrier / adhesive / polypropylene).

The adhesives used in these multi-layered systems are normally polyolefins, such as polypropylene or polyethylene, grafted with polar monomers, such as acrylic acid or maleic anhydride.

An example for a multi-layered construction is disclosed in JP 2000-143908 in which a polypropylene composition comprising a propylene based resin modified with an unsaturated carboxylic acid and its derivatives and having a MFR (2.16 kg, 180°C) of 1,000 to 10,000 g/10 min and other olefinic polymers including a polypropylene based resin having at least 95 wt% propylene content and a MFR (2.16 kg, 230°C) of 0.5 to 50 g/10 min for the use as polypropylene layer is disclosed which is laminated to the barrier layer via an anchor coat agent.

However, such packaging is susceptible to flow instability during processing- leading to product instability- and to delamination in the final product.

Furthermore such multi-layered constructions are unsuitable for injection moulding.

Three layer constructions are known from JP 2004-082499 A2, EP 115163 and WO 00/63085. Specifically, WO 00/63085 describes three layer constructions consisting of two skin layers comprising polypropylene and a minor amount of a compatibiliser and/or adhesive, and a core layer of a polar polymer having good oxygen barrier properties. While providing acceptable oxygen barrier, these constructions suffer from a major drawback in that the layers do not adhere well to each other, resulting in delamination and instability of the resulting packaging system.

A polypropylene composition comprising a propylene based resin and 1 to 10 wt% of a functionalized polypropylene material, further including a mineral filler material and an amorphous, fatty acid amidtreated silica gel, is known from WO 96/22328 to be suitable for articles with improved surface hardness and scratch resistance.

Further, WO 02/059196 discloses a polypropylene composition comprising a highly crystalline propylene polymer with an NMR tacticity of at least 94, wood fiber and optionally a functionalized olefin polymer such as maleated polypropylene which is useful in providing extruded outdoor building components such as decking.

It is object of the present invention to overcome the above stated problems and provide a multi-layered article especially for food and medical packaging which is suitable for injection moulding and injection stretch blow moulding and provides good oxygen barrier properties and a high adhesive strength between the polypropylene layer (a) and the barrier layer (b) comprising polar polymers selected from polyamide (PA), poly(vinyl alcohol) copolymers (PVOH), ethylene vinyl alcohol copolymers (EVOH).

The present invention resides in the finding that the adhesion properties of a multi-layered article comprising a layer (b) comprising polar polymers selected from polyamide (PA), poly(vinyl alcohol) copolymers (PVOH), ethylene vinyl alcohol copolymers (EVOH) and a polypropylene layer (a) can be improved by blending the propylene copolymer (A) used for the polypropylene layer (a) with a propylene polymer chemically modified with at least one polar polymer (B) which has a melt flow rate at a load of 2.16 kg at a temperature of 190°C of 300-1000 g/10 min.

The present invention therefore relates to a multi-layered article according to claim 1.

It has surprisingly been found that the inventive multi-layered article provides an improved adhesion of polypropylene layer (a) and barrier layer (b) and concurrently provides good oxygen barrier properties without need of separate adhesive layers.

Layer (b) comprises polar polymers selected from polyamide (PA), poly(vinyl alcohol) copolymers (PVOH), ethylene vinyl alcohol copolymers (EVOH) or blends thereof which due to their high polarity form a barrier against oxygen ($O_2$), carbon dioxide ($CO_2$), liquid or volatile hydrocarbons (HC). Layer (b) preferably consists of these polar polymers. Due to the oxygen barrier properties of layer (b) the multi-layered article of the present invention preferably has an oxygen permeability of max. 7.5 ml*mm/(day*m$^{2*}$bar). Layer (b) thus can be abbreviated as oxygen barrier layer.

The polypropylene layer (a) forms a barrier against water in liquid or vapor form.

The "propylene homo- or copolymer including at least one polar monomer" (B) can be denoted with the term "chemically modified propylene polymer". A polar monomer is defined as a monomer having a permanent electric dipole above 0.8 D. A propylene polymer or copolymer is defined as a polymer or copolymer having at least 50 wt% of propylene monomer units.

The polar monomer can be introduced by grafting and/or by copolymerization. For grafting the propylene backbone may be a propylene homo- or copolymer.

The polar monomer preferably has a permanent electric dipole of at least 2 D, more preferably of at least 3 D, most preferably of at least 3.5 D.

The blending of the inventive chemically modified propylene polymer (B) with the propylene copolymer (A) of the polypropylene layer (a) enables a reduction in the number of layers of the multi-layered article. The multilayered article of the present invention thus can be easily produced by means of injection moulding, injection blow moulding or injection stretch blow moulding.

Component (B) is modified with at least one polar monomer. In this regard, the polar monomers are preferably selected from a group consisting of ethylenically unsaturated carboxylic acids, ethylenically unsaturated carboxylic acid anhydrides and derivatives of ethylenically unsaturated carboxylic acids.

Examples of suitable ethylenically unsaturated carboxylic acids, anhydrides and derivatives thereof include maleic acid, fumaric acid, acrylic acid, methacrylic acid, crotonic acid, isocrotonic acid, vinylacetic acid, oleic acid, elaidic acid, linoleic acid, linolenic acid, aconitic acid, itaconic acid, and narbonenedicarboxylic acid, and anhydrides and derivatives, such as amides and esters thereof.

Especially suitable polar monomers are maleic anhydride, acrylic acid and methacrylic acid. It is especially preferred that the polar monomers in component (B) comprise, most preferably consist of maleic anhydride.

In a preferred embodiment component (B) is an anhydride modified propylene polymer, most preferably a maleic anhydride modified propylene polymer.

It is preferred that the polar monomer is grafted on the propylene backbone according to any suitable method well known in the art. The propylene backbone may be a propylene homo- or copolymer.

It is preferred that component (B) has an amount of polar monomer units of 0.2 to 10 wt%, more preferably 0.4 to 8 wt% and most preferably 0.6 to 5 wt%.

The density of component (B) preferably is from 880 kg/m$^2$ to 930 kg/m$^2$, more preferably from 890 kg/m$^2$ to 920 kg/m$^2$, most preferably from 895 kg/m$^2$ to 910 kg/m$^2$.

The numerical value of the melt flow rate (MFR) at 190 °C and a load of 2.16 kg of the chemically modified propylene polymer (B) preferably is at least twice as high, more preferably three times as high, still more preferably four times as high, most preferably five times as high as the numerical value of the melt flow rate (MFR) at 230 °C and a load of 2.16 kg of the propylene copolymer (A).

Component (B) has a melt flow rate (MFR) at 190°C and a load of 2.16 kg of at least 300 g/10 min, preferably at least 350 g/10 min, and most preferably at least 400 g/10 min. The upper limit for the melt flow (MFR) at 190°C and a load of 2.16 kg of component (B) is 1000 g/10 min, more preferably 800 g/10 min, most preferably 650 g/10 min.

Especially applicable as component (B) is Bynel 50E803, commercially available from DuPontde Nemours, Inc. (USA).

The melt flow rate (230 °C, 2.16 kg) of component (A) preferably has a lower limit of 12 g/10 min, more preferably 15 g/10 min, and most preferably 18 g/10 min.

The melt flow rate of component (A) preferably is not higher than 120 g/10 min, more preferably 110 g/10 min, and most preferably 100 g/10 min.

The melt flow rate (MFR) of propylene copolymer (A) is determined at a temperature of 230°C and a load of 2.16 kg according to ISO 1133. According to the supplier (DuPont de Nemours, Inc. (USA)) the melt flow rate of Bynel 50E806 was determined at a load of 0.325 kg and a temperature of 160°C. due to its high flowability and then for better comparability converted to a temperature of 190°C and a load of 2.16 kg. Melt flow rate and average molecular weight are inversely related to each other, i.e. higher melt flow rate is equivalent to lower average molecular weight and vice versa. Further, the higher the melt flow rate, the lower the viscosity of the polymeric material.

Component (B) is blended with propylene copolymer (A) to form a polypropylene composition.

In the polypropylene composition the amount of component (A) to component (B) is from 99:1 to 70:30, more preferably from 98:2 to 85:25, still more preferably from 97.5:2.5 to 80:20 and most preferably from 96:4 to 90:10.

The polypropylene composition may further comprise additives, such as antioxidants, stabilisers, fillers, nucleating agents, polymer processing agents, reheat agents, clarifying agents etc., in an overall amount of not more than 5 wt%.

Further, the polypropylene composition may comprise further polymeric components in an amount of up to 3 wt%, more preferably up to 1 wt%. Preferred polymeric components are dendritic polymer components comprising primary hydroxyl groups.

Component (B) is in particular present in the polypropylene composition in an amount of 1 to 30 wt%, preferably 2 to 25 wt%, more preferably 2.5 to 20 wt% and most preferably 4 to 10 wt%.

Component (A) is preferably present in the polypropylene composition in an amount of 70 to 99 wt%, more preferably 75 to 98 wt%, still more preferably 80 to 97.5 wt%, and most preferably 90 to 96 wt%.

The propylene copolymer (A) may be a single propylene copolymer, but may also be a mixture of different propylene homo- and copolymers whereby also only different copolymers may be mixed. It may also comprise a mixture of at least one homopolymer with at least one copolymer. This also applies for all preferred embodiments of the propylene copolymer (A).

It is preferred that the density of propylene copolymer (A) is comparable to the density of anhydride modified propylene polymer (B). Comparable in this context means that the densities of components (A) and (B) preferably do not differ by more than $\pm$ 10%, more preferably by not more than $\pm$ 5%.

Preferably, the density of propylene copolymer (A) is from 880 kg/m$^2$ to 930 kg/m$^2$, more preferably from 890 kg/m$^2$ to 920 kg/m$^2$, most preferably from 895 kg/m$^2$ to 910 kg/m$^2$.

In order to provide a multi-layered article with good mechanical properties the tensile modulus of the propylene copolymer (A) is preferably at least 850 MPa, more preferably at least 950 MPa and most preferably at least 1000 MPa, determined according to ISO 527-2.

In order to provide a multi-layered article with good impact properties the Charpy notched impact strength at 23°C of the propylene copolymer (A) is preferably at least 4.0 kJ/m$^2$, more preferably at least 4.5 kJ/m$^2$ and most preferably at least 5.0 kJ/m$^2$, determined according to ISO 179/1eA at a temperature of 23 °C using test specimens in the dimensions 80 mm x 10 mm x 4 mm, produced according to ISO 1873-2.

Propylene copolymer (A) of use in this invention may be unimodal or multimodal. In a unimodal polymer its molecular weight profile comprises a single peak. By multimodal, preferably bimodal, is meant that its molecular weight profile does not comprise a single peak but instead comprises the combination of two or more peaks (which may or may not be distinguishable) centered about different average molecular weights as a result of the fact that the polymer comprises two or more separately produced components, e.g. blended components or more preferably components prepared in situ.

Multimodal polymers may be prepared by simple blending, by two or more stage polymerisation or by the use of two or more different polymerisation catalysts in a one stage polymerisation. Preferably however they are produced in a two-stage polymerisation using the same catalyst, e.g. a metallocene catalyst or preferably a Ziegler-Natta catalyst, in particular a slurry polymerisation in a loop reactor followed by a gas phase polymerisation in a gas phase reactor. Conventional cocatalysts, supports/carriers, electron donors etc. can be used.

Unimodal polymers can be made using a one stage process e.g. using the parameters above for slurry and gas phase processes. Catalysts employable are the same as those utilized to manufacture multimodal polymers.

In one embodiment of the invention component (A) is a propylene random copolymer.

In this embodiment it is preferred that the propylene random copolymer has an amount of comonomer units of 0.1 to 10 wt%, more preferably of 0.5 to 7 wt%, and most preferably of 1.2 to 4.5 wt%.

It is preferred that the comonomer units are selected from the group consisting of ethylene and alpha-olefins having 4 to 12 carbon atoms. Especially preferred are ethylene, 1-butene and 1-hexene comonomer units. Mostly preferred is ethylene.

In another embodiment of the invention component (A) is a heterophasic propylene copolymer comprising a propylene homo- or copolymer matrix phase and an elastomeric ethylene-propylene phase dispersed in the matrix phase.

The matrix phase may be a single propylene homo- or copolymer, but may also be a mixture of different propylene homo- or copolymers.

The same applies for the elastomeric phase, i.e. there may be a single compound, but there may also be a mixture of different compounds.

In a preferred embodiment, the heterophasic propylene copolymer consists of the matrix phase and the elastomeric phase.

The fraction insoluble in p-xylene at 25°C (XCU) is meant to be the fraction of the heterophasic propylene copolymer that is not soluble in p-xylene at 25°C representing for the most part isotactic propylene homo- or copolymer. The fraction soluble in p-xylene, xylene cold solubles (XCS), is denoted the fraction of the polypropylene resin that is soluble in p-xylene at 25°C representing for the most part amorphous ethylene-propylene copolymer.

It is preferred that the heterophasic propylene copolymer has an amount of xylene cold solubles (at 25°C) of 5 to 30 wt%, more preferably of 10 to 25 wt% and most preferably of 13 to 20 wt%.

The heterophasic propylene copolymer preferably has an amount of ethylene comonomer units of 5 to 30 wt%, more preferably of 6 to 20 wt%, most preferably of 7 to 15 wt%.

The matrix phase of the heterophasic propylene copolymer may be a propylene homo- or copolymer. It is preferred that the matrix phase is a propylene homopolymer.

The matrix phase of the heterophasic propylene copolymer preferably is a highly crystalline propylene homo- or copolymer. It is preferred that the matrix phase has an amount of xylene cold solubles of not more than 5 wt%, more preferably not more than 3 wt%.

The heterophasic propylene copolymer is preferably produced in a multi-stage process in a multi-stage reaction sequence. In a preferred multistage process, the propylene homo- or copolymer matrix is produced in the bulk reactor and afterwards transferred to the gas phase reactor in which the ethylene-propylene elastomeric phase is produced in the presence of the matrix phase.

Another preferred multi-stage process is a slurry-gas phase process, such as developed by Borealis and known as the Borstal® technology. This process is described in EP 0 887 379 A1, WO 92/12182, WO 2004/000899, WO 2004/111095, WO 99/24478, WO 99/24479 and WO 00/68315. Mostly preferred, the heterophasic propylene copolymer is produced in the Borstar® process.

The bulk polymerisations are preferably performed in a so-called loop reactor.

Optionally, the process may also comprise a pre-polymerisation step in a manner known in the field and which may precede the first polymerisation step.

The process is preferably a continuous process.

In all embodiments propylene copolymer (A) is preferably blended with chemically modified propylene polymer (B) and optionally further additives to form the polypropylene composition of the polypropylene layer.

The polypropylene composition can be produced by any suitable melt mixing process at temperatures above the melting point of the respective polypropylene composition.

Typical devices for performing said melt mixing process are twin screw extruders, single screw extruders optionally combined with static mixers, chamber kneaders such as Farell kneaders and reciprocating co-kneaders, for example Buss co-kneaders.

Preferably, the melt mixing process is carried out in a twin screw extruder with high intensity mixing segments and preferably at a temperature of 20-50 °C above the melting point of the respective base polymer.

The polypropylene layer (a) of the inventive multi-layered article forms a barrier against water in liquid or vapour form ($H_2O$) and comprises the polypropylene composition as defined above.

The barrier layer (b) of the multi-layered article according to the invention comprises polar polymers like polyamide (PA), poly(vinyl alcohol) copolymers (PVOH) or ethylene vinyl alcohol copolymers (EVOH) or blends thereof.

More specifically, the polymer forming the barrier layer (b) can be selected from crystalline or amorphous polyamides of aliphatic or aromatic nature like polyamide-6 (PA-6), polyamide-6-6 (PA-66), polyamide-12 (PA-12), poly-m-xylylene adipamide (nylon MXD6) or poly-m-xylylene pimelamide (nylon MXD7), or from poly(vinyl alcohol) copolymers (PVOH) or ethylene vinyl alcohol copolymers (EVOH) or blends thereof.

Even more specifically, the barrier layer (b) can be selected from poly-m-xylylene adipamide (MXD-6; commercially available from Mitsubishi Petrochemical, Japan) and an ethylene vinyl alcohol copolymer comprising from 30 to 50 mol% ethylene.

The multi-layered article preferably comprises at least two separate layers.

A preferred embodiment of the multi-layered article according to the present invention consists of a single barrier layer (b) sandwiched between two polypropylene layers (a).

In another preferred embodiment the multi-layered article according to the present invention comprises a further layer (c) which comprises a polypropylene composition which differs from the polypropylene composition of layer (a). The term "differs" in this regard denotes that the polypropylene composition of layer (c) is different to that of layer (a) in at least one property, e.g. the melt flow rate of component (A) or (B), the density of component (A) or (B), the amount or nature of comonomer in component (A), the amount or nature of the polar monomer in component (B), or the amount of component (A) compared to component (B). In this preferred embodiment the multi-layered article preferably consists of a single barrier layer (b) which is sandwiched between the two polypropylene layers (a) and (c).

Since these embodiments consist of two and three layers respectively, they are particularly suitable to cast film extrusion techniques followed by uni- or biaxially stretching techniques and to injection and blow moulding techniques, such as for injection stretch blow moulding (ISBM).

It is preferred that the multi-layered article of the present invention is produced by means of injection moulding, injection blow moulding or injection stretch blow moulding. Especially preferred are injection moulding and injection stretch blow moulding for producing the multi-layered article of the present invention.

Thus, the present invention further relates to a process for the production of the multi-layered article of the present invention by means of injection moulding, injection blow moulding or injection stretch blow moulding. Especially preferred are injection moulding and injection stretch blow moulding for producing the multi-layered article of the present invention.

The ISBM process is well known in the art and involves producing a pre-form by injection moulding followed by stretching and blowing the pre-form in order to induce biaxial orientation in the solid phase. Two types of ISBM process are practiced. In the single-stage process a pre-form is injection moulded, stretched and blown before it is allowed to cool. In the two-stage process, the injection moulded pre-form is allowed to cool before it is reheated, stretched and blown into a container. Since the polypropylene and the barrier polymer typically have different melting temperatures the processing window of the materials might not overlap or may overlap to a limited extent.

In the Example section the processing window for the ISBM process is measured on multi-layered bottles stretch blow moulded from PPreX(R) pre-forms. Thereby, the processing window is defined as the difference between the Max. temp and Min. temp wherein:

Max. temp = the temperature at which a maximum stretching force of 10 N is required to stretch the polymer (at maximum stretching force less than 10 N, areas of melted polymer are visible on the sample)

Min. temp = the lowest temperature at which stretching of the polymer is possible without polymer failure.

The temperature range over which the sample can be stretched without producing visible failures is the processing window. Temperatures which are too low for stretching cause polymer failure. Temperatures which are too high for stretching cause the polymer to melt and/or lead to visible variations in the thickness of the blown articles.

Injection stretch blow moulding is a known process which involves certain steps. First, a 2-layer or 3-layer pre-form is injection moulded by the co-injection of the polypropylene layer forming polypropylene composition and a polymer composition forming the barrier layer. Co-injection nozzles suitable for the preparation of 2- or 3-layer pre-forms are known in the art. In a 3-layer construction the barrier material will form the core layer in the pre-form with, typically identical, polypropylene layers external on the pre-form.

The compositions are heated to melt them to form a flowable polymer melt that is introduced by injection into the mould. The injection mould has a cavity and a mating ram to form the pre-form into the desired shape, e.g. one having threaded neck portion and a bottle body portion. The pre-form can then be removed from the mould, cooled and stored until it is ready to be formed into an article or the pre-form can be stretched and blown straight away.

In the reheating operation, when the pre-form reaches the desired temperature, the reheated pre-form is then ready for stretch blow moulding. The pre-form is placed within a suitably shaped mould and a gas, such as air or nitrogen, is injected into the internal volume of the pre-form through a nozzle as a push rod forces the polypropylene composition to expand outwardly to fill the mould. This is the stretching and blowing stage of the process. During this step the material becomes biaxially oriented which improves the physical and optical properties of the article, as well as improving the barrier properties.

The stretching temperatures used are normally between 90 °C and 160 °C, e.g. 130 °C. Stretching speeds may range from 20 to 60 m/min in both transverse direction (TD) and machine direction (MD).

Preferably the multi-layered article has a thickness of 500 to 3000 $\mu$m before, and 100 to 1000 $\mu$m after stretching at a stretching ratio of 1.5 to 10 whereby the relative barrier layer thickness preferably lies between 5 to 30 % of the overall multi-layered article thickness.

It has been found that a multi-layered article of the present invention comprising a Nylon barrier layer is especially suitable for injection stretch blow moulding applications.

In one embodiment the multi-layered article can be produced by means of a process comprising the steps of

(I) mixing a chemically modified propylene polymer with a propylene copolymer, and optionally further additives, and extruding the resulting propylene composition;

(II) co-injecting the extrudate from step (I) and a barrier layer composition, e.g. EVOH or Nylon, to form a 2- or a 3-layer pre-form, in which 3-layer pre-form the barrier layer composition forms a core layer and the polypropylene composition forms the outer layers;

(III) allowing the pre-form to cool;

(IV) reheating the pre-form to a temperature in the range 90 to 160 °C; and

(V) stretching and blowing the pre-form to form an article.

The multi-layered article can further be produced by means of a process comprising the steps of:

(I) mixing a chemically modified propylene polymer with a propylene copolymer, and optionally further additives, and extruding the resulting propylene composition;

(II) co-injecting the extrudate from step (I) and a barrier layer composition, e.g. EVOH or Nylon, to form a 2- or a 3-layer pre-form, in which 3-layer pre-form the barrier layer composition forms a core layer and the polypropylene composition forms the outer layers; and

(III) stretching and blowing the pre-form to form an article without allowing the article to cool.

In another embodiment the multi-layered article can be produced by means of a co- injection moulding process as known in the art.

The multi-layered articles can be advantageously used for the production of articles, especially containers as for medical uses or for food and drink packaging. They possess an advantageously high adhesion force between the polypropylene layer(s) and the barrier layer and further advantageously low oxygen permeability.

It is preferred that the multi-layered article of the invention has an oxygen permeability of less than 7.5 ml*mm/(day*$m^2$*bar), more preferably less than 5.0 ml*mm/(day*$m^2$*bar), still more preferably less than 2.5 ml*mm/(day*$m^2$*bar), most preferably less than 1.0 ml*mm/(day*$m^2$*bar).

It is further preferred that the force needed to separate the polypropylene layer and the barrier layer is at least 3.0 MPa, more preferably at least 3.5 MPa after sealing at 230°C and at least 1.0 MPa, more preferably at least 1.5 MPa after sealing at 200°C.

In the following, the present invention is described by way of examples.

Examples:

1. Definitions

a) Melt flow rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene generally is determined at a temperature of 230 °C and a load of 2.16 kg if not mentioned otherwise. The $MFR_2$ of polyethylene is determined at a temperature of 190 °C and a load of 2.16 kg. The $MFR_2$ of Bynel® 50E803 was determined according to ISO 1133 at a temperature of 190°C at a load of 2.16 kg.

b) Density

The density is measured according to ISO 1183 on compression molded specimens.

c) Xylene Soluble Fraction

The xylene soluble fraction (XCS) as defined and described in the present invention is determined as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

$$XCS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of the analysed sample (milliliter). The fraction insoluble in p-xylene at 25°C (XCU) is then equal to 100% - XCS%.

d) Oxygen permeability

The oxygen permeability is determined on co-injected 3-layered films prepared by biaxial stretching from injection molded plates. The oxygen permeability of the films was measured at +23°C and a relative humidity of 65% using the procedure and instrument described in ASTM D3985. The model OX-TRAN 100A (Mocon Corporation, USA) was used. The diffusion cell area was 100 cm$^2$.

e) Delamination properties

The delamination properties of multi-layered articles (cups or bottle preforms) are determined by visual inspection.
The articles were cut into 4 pieces along their height with a conventional cutter having 9 mm width of the blade (e.g. Stanley Cutter MPO 10-409).

Case 1: As far as delamination either by separation or formation of bubbles already took place during cutting the product is qualified as having "no adhesion".

Case 2: As far as bubbles having a diameter of 1 to 10 mm occur on the cut face covering more than 5 % of the cut face, the product is qualified having "poor adhesion".

Case 3: As far as bubbles having a diameter of 1 to 5 mm occur on the cut face covering less than 5 % of the cut face, the product is qualified having "some adhesion".

Case 4: As far as bubbles are not visible with the naked eye on the raw cut product but do occur after application of manual rubbing on both sides of the cut part using a force of from 1 to 5 kN/cm$^2$ for 1 minute, the product is qualified to have good adhesion.

Case 5: As far as bubbles are not visible with the naked eye on the raw cut product and after application of manual rubbing on both sides of the cut part using a force of from 1 to 5 kN/cm$^2$ for 1 minute, the product is qualified to have very good adhesion.

f) Adhesion Force

The adhesion force was determined according to ISO 527-3 at a temperature of +23°C and a relative humidity of 50% on multi-layered films.
The tested films consisted of a 100 $\mu$m polypropylene film, prepared on PM30 Cast Film machine which was sealed with an EVOH film (F101B, distributed by Eval) of 100 $\mu$m at a sealing force of 300 N, a sealing time of 0.5 seconds and sealing temperatures of 200°C and 230°C. The sealing procedure was as follows:

A polypropylene film and an EVOH film of 20 cm x 7 cm each were sealed in the laboratory sealing device KOPP SGPE-20 under the above conditions and were taken out of the device immediately after sealing. For each temperature, 10- samples were sealed.

The adhesion force was determined by means of a tensile test according to ISO 527-3 under the following conditions:

Temperature: 23°C

Relative humidity: 50%

Testing speed: 200 mm/min

Measuring length: 100 mm

Test specimens: 1.5 x 20 cm, cut from the film

g) Dipole Moment

The dipole moment is measured according to Guggenheim's method described in Guggenheim, E.A., Trans. Faraday Soc., 1951, vol. 47, p. 573. The dipole moment data refers to a temperature of 25 °C using benzene as the solvent.

2. Materials

The following components were used to prepare the examples:

a) RJ370MO is a propylene random copolymer having an ethylene content of 3.9 wt%, a melt flow rate (230°C, 2.16 kg) of 45 g/10 min and a density of 905 kg/m$^3$. The copolymer is commercially available from Borealis Polyolefine GmbH, Austria.

b) RF926MO is a propylene random copolymer having an ethylene content of 3.3 wt%, a melt flow rate (230°C, 2.16 kg) of 20 g/10 min and a density of 905 kg/m$^3$. The copolymer is commercially available from Borealis Polyolefine GmbH, Austria.

c) RF846MO is a propylene random copolymer having an ethylene content of 2.5 wt%, a melt flow rate (230°C, 2.16 kg) of 30 g/10 min and a density of 905 kg/m$^3$. The copolymer is commercially available from Borealis Polyolefine GmbH, Austria.

d) BH345MO is a heterophasic propylene copolymer having a total ethylene content of 9 wt%, a total amount of xylene cold solubles of 16.5 wt%, a melt flow rate (230°C, 2.16 kg) of 45 g/10 min and a density of 905 kg/m$^3$. The copolymer is commercially available from Borealis Polyolefine GmbH, Austria.

e) Bynel 50E803 (abbr. E803) is a maleic anhydride grafted polypropylene having a melt flow rate (190°C, 2.16 kg) of 470 g/10 min, and a density of 900 kg/m$^3$.The anhydride modified polypropylene is commercially available from DuPont de Nemours Inc., USA).

f) Bynel 50E806 (abbr. E806) is a maleic anhydride grafted polypropylene having a melt flow rate (230°C, 2.16 kg) of 6.0 g/10 min, and a density of 880 kg/m$^3$.The anhydride modified polypropylene is commercially available from DuPont de Nemours Inc., USA.

g) Plexar PX 6006 (abbr. PX 6006) is an anhydride modified polypropylene having a melt flow rate (230°C, 2.16 kg) of 4.0 g/10 min. The anhydride modified polypropylene is commercially available from Equistar Chemicals LP, USA).

h) Boltorn H30 (abbr. Boltorn) is a dendritic polymer with theoretically 32 primary hydroxyl groups and a molecular weight Mw of 3604 g/mol. The dentritic polymer is commercially available from Perstorp, Sweden.

i) EVAL SP434 (abbr. SP434) is an ethylene vinyl alcohol (EVOH) copolymer having and ethylene content of 32 mol%, a melt flow rate (190°C, 2.16 kg) of 4.9 g/10 min and a density of 1180 kg/m$^3$. The barrier polymer is commercially available from EVAL Europe NV, Belgium.

j) EVAL SP295 (abbr. SP295) is an ethylene vinyl alcohol (EVOH) copolymer having and ethylene content of 44 mol%, a melt flow rate (190°C, 2.16 kg) of 5.5 g/10 min and a density of 1130 kg/m$^3$. The barrier polymer is commercially available from EVAL Europe NV, Belgium.

k) EVAL F101B (abbr. F101B) is an ethylene vinyl alcohol (EVOH) copolymer having and ethylene content of 32 mol%, a melt flow rate (190°C, 2.16 kg) of 1.6 g/10 min and a density of 1190 kg/m$^3$. The barrier polymer is commercially available from EVAL Europe NV, Belgium.

l) Nylon MXD-6 (abbr. MXD-6) is a polyamide produced through polycondensation of meta-xylylene diamine (MXDA) with adipic acid. Nylon MXD-6 is commercially available from Mitsubishi Gas Chemical Company, Inc., Japan.

3. Preparation of the multilayered films and articles

a) Polypropylene compositions

All polypropylene compositions used for the different tests in the example section were prepared by blending the propylene copolymer component with the anhydride modified polypropylene and, optionally, the dendritic polymer in a PRISM TSE24 co-rotating twin screw extruder with a screw diameter of 24 mm and a length to diameter ratio of 40 with two high intensity mixing segments at a mixing temperature of 190-230°C and a throughput of 10 kg/h and a screw speed of 50 rpm. The material was extruded to two circular dies of 3 mm diameter into a water bath for strand solidification and then pelletized and dried. The thus prepared polypropylene compositions are used for the preparation of the polypropylene layers of the multi-layered films or articles in the different tests in the example section.

b) Preparation of biaxially oriented multi-layered films

Injection moulded plates were prepared by co-injecting two polypropylene layers imbedding one oxygen barrier layer in injection moulding boxes of 35 cm x 15 cm x 10 cm with a thickness of 2 mm on a Netstal 1570/300 MPS injection moulding machine at 230°C with an injection speed of 100 mm/s, a holding pressure of 315 g product weight of box and a holding time of 12 s. Dosing at backpressure of 100 bar and 150 rpm. The mould temperature was 30 °C on injection side and 15 °C on clamping side. The cooling time was 15 s. From the bottom of these boxes, plates of about 86 mm x 86 mm x 2 mm were cut for biaxial drawing. The thickness of the plates was 2 mm whereby the sandwiched oxygen barrier layer had a thickness of 200 $\mu$m.
Biaxially oriented films were formed from the above injection moulded plates. The biaxial orientation process involved biaxial drawing in a laboratory film stretcher KARO IV (Brückner Maschinenbau GmbH, Siegsdorf, Germany) at VTT, Tampere, Finland. The plates were heated in a heating chamber by IR radiation for a defined period of time 120 s before drawing to a temperature of up to 150°C. To simulate as much as possible the ISBN process, the maximum stretch speed of 35 m/min was used. The stretch ratio of 3.5 x 3.5 was selected in order to achieve a 10 times thickness reduction, e.g. from 2 mm to 0.2 mm (same as in ISBM process). During the simultaneous drawing force elongation curves were recorded in the machine direction and in the transverse direction.

c) Preparation of multi-layered bottle pre-forms

PPreX(R) pre-forms with neck dimension 38/10 mm and weight 14 g were injection moulded at standard conditions for polypropylene (MFR$_2$: 20 g/10 min), i.e. mass-temperature: 210 °C,
Settings for EVOH-component: 230 °C mass temperature
Settings for nylon component: 250 °C mass temperature
Two polypropylene layers as outer layers were co-injected sandwiching an oxygen barrier layer (Nylon layer or EVOH layer).

d) Preparation of multi-layered bottles

Multi-layered bottles (300 ml) were stretch blow moulded on a one-cavity SIG Corpoplast LBOIHR machine from 14 g pre-forms. This machine is equipped with two heater boxes, each having 5 IR lamps, but only one box was used in the determination of processing windows. The setting ratio of the lamps in the heater box was L1/L2/L3/L4/L5 46/57/85/85/54. All preforms were heated for the same period of time, only total heating was changed. Pre-forms were heated in two periods, HTI and HT2. Between HTI and HT2 is a conditioning time, CTI. After HT2 and before stretching is a conditioning time, CT2. HTI , HT2, CTI and CT2 were 15 seconds, 4.6 seconds, 13 seconds and 10 seconds respectively. During heating of the pre-forms, surface cooling was provided to prevent surface melting. Cooling was carried out at 80% of the fan capacity. Additionally the pre-form was rotated on a mandrel throughout heating and conditioning at a speed of 100 rpm. After CT2, all bottles were blown under the same conditions. The pre-form was brought into the bottle mould and first stretched at a speed of 1000 mm/s. A pressure of 6 bar for 1.2 seconds was then used to blow up the bottle.

e) Preparation of multi-layered cups

Multi-layered cups were formed by co-injecting two polypropylene layers as outer layers sandwiching an oxygen barrier layer (Nylon layer or EVOH layer).
The injection-moulding settings for the co-injection of the multi-layered cups were:

| | |
|---|---|
| Polypropylene layer injection units: | Hopper zone: 220°C |
| | Barrel zone: 250°C |
| Oxygen barrier layer injection unit: | Hopper zone: 230°C |
| | Barrel zone: 240°C |

Injection pressure: 1000 ± 20 bar
Switch over pressure: 700 ± 20 bar

The thickness of the oxygen barrier layer was 10 μm, the thickness of the overall three-layered cup was 0.75 mm.

4. Results

a) Oxygen barrier properties

For determining the oxygen barrier properties as described above under item (1d) biaxially oriented films are prepared as described above under item (3b). The materials used for the polypropylene layers and the oxygen barrier layer are listed below in Table 1. It can be seen that the films comprising polypropylene layers according to the present invention show improved $O_2$ barrier properties.

Table 1: Oxygen barrier properties of three layer films

| Examples | Barrier layer | PP layer | Modifier in PP layer | $O_2$ permeability [ml*mm/(day*m$^2$*bar] |
|---|---|---|---|---|
| CE 1 | --- | RJ370MO | --- | 8.75 |
| Ex 1 | SP434 | RJ370MO | 10 wt% E803 | 0.44 |
| Ex 2 | SP434 | RJ370MO | 5 wt% E803 | 0.25 |
| Ex 3 | SP434 | RJ370MO | 5 wt% E803 + 0.75 wt% Boltorn | 0.20 |
| Ex 4 | MXD-6 | RJ370MO | 10 wt% E803 | 0.94 |
| Ex 5 | MXD-6 | RJ370MO | 5 wt% E803 + 0.75 wt% Boltorn | 4.50 |

b) Adhesion properties of bottle pre-forms

For determining the adhesion of the polypropylene layer with the oxygen barrier layer in a first test the delamination of the layers in multi-layered bottle pre-forms prepared as described above under item (3c) is determined. The bottle pre-forms consist of two polypropylene layers sandwiching an oxygen barrier layer as listed below in Table 2. The delamination of the layers is determined by visual inspection and classified in one of the five adhesion categories no adhesion, poor adhesion, some adhesion, good adhesion, and very good adhesion as defined above under item (1e).

The results are listed in Table 2.

Table 2: Adhesion properties of multi-layer pre-forms

| Examples | Barrier layer | PP layer | Modifier in PP layer | Adhesion |
|---|---|---|---|---|
| CE 2 | SP434 | RF926MO | --- | No adhesion |
| CE 3 | SP434 | RF926MO | 10 wt% E806 | Some adhesion |
| Ex 6 | SP434 | RF926MO | 10 wt% E803 | Good adhesion |
| Ex 7 | SP295 | RF846MO | 10 wt% E803 | Good adhesion |

In a second adhesion test the delamination of multi-layered bottle preforms having two polypropylene layers imbedding one barrier layer as listed in Table 3 prepared as described above under item (3c) on inner side and outer side of the bottle pre-form is determined by visual inspection according to item (1e) and classified in one of the five above adhesion categories. The results are listed in Table 3.

Table 3: Adhesion properties of multi-layer bottle pre-forms

| Examples | Barrier layer | PP layer | Modifier in PP layer | Adhesion inner side | Adhesion outer side |
|---|---|---|---|---|---|
| Ex 10 | SP434 | RF926MO | 10 wt% E803 | Good | Good |
| CE 5 | SP434 | RF926MO | 10 wt% PX6006 | Poor/Some | Poor |
| CE 6 | SP434 | RF926MO | 10 wt% E8D6 | Poor | Poor |
| Ex 11 | MXD-6 | RF926MO | 10 wt% E803 | Some/Good | Some/Good |

c) Adhesion properties of multilayered cups

In this test the delamination of multi-layered cups having two polypropylene layers imbedding a barrier layer prepared as described above under item (3e) is determined by visual inspection and classified in one of the five above adhesion categories. The results are listed in Table 4.

Table 4: Adhesion properties of multi-layer cups

| Examples | Barrier layer | PP layers | Modifier in PP layers | Adhesion |
|----------|---------------|-----------|------------------------|----------|
| CE 4 | SP434 | RJ370MO | --- | No adhesion |
| Ex 8 | SP434 | RJ370MO | 10 wt% E803 | Very good adhesion |
| Ex 9 | SP434 | RJ370MO | 5 wt% E803 | Good adhesion |

d) Processing window for stretch blow moulding applications

In this test the processing window for stretch blow moulding of multi-layered bottles has been determined. The processing window thereby defines the temperature range over which the sample could be stretched without producing visible failures. The bottles are prepared from the bottle pre-forms in Table 3 according to the procedure of item (3d). It can be seen that the processing window of the nylon species MXD-6 overlaps with the processing window of the polypropylene composition whereas the processing window of the EVOH species SP434 does not match with that of the polypropylene composition. Thus, for stretch blow moulding applications multi-layered constructions of the inventive polypropylene layers and nylon layers are especially suitable. The results are listed in Table 5.

Table 5: Processing properties and oxygen permeability of multi-layer bottle performs

| Examples | Barrier layer | PP layer | Modifier in PP layer | Overlap in processing windows |
|----------|---------------|----------|----------------------|-------------------------------|
| CE 7 | --- | RF926MO | --- | Δ 7°C |
| Ex 10 | SP434 | RF926MO | 10 wt% E803 | None |
| CE 5 | SP434 | RF926MO | 10 wt% PX6006 | None |
| CE 6 | SP434 | RF926MO | 10 wt% E806 | None |
| Ex 11 | MXD-6 | RF926MO | 10 wt% E803 | Δ 7°C |

e) Adhesion force

Finally, in a sealing test as described above under item (1f) it can be seen that multi-layered films with heterophasic polypropylene layers according to the invention show comparable adhesion properties as the inventive multilayered films with propylene random copolymer layers. The results as listed in Table 6.

Table 6: Sealing test

| Examples | Barrier layer | PP layer | Modifier in PP layer | Separation Force [MPa] at Sealing temperature | |
|----------|---------------|----------|----------------------|--------------------|--------------------|
| | | | | 230°C | 200°C |
| Ex 12 | F101B | BJ345MO | 2.5 wt% E803 | 4.2 | 1.6 |
| Ex 13 | F101B | BJ345MO | 10 wt% E803 | 3.7 | 2.9 |
| Ex 14 | F101B | RJ370MO | 10 wt% E803 | 5.4 | 3.3 |

**Claims**

1. A multi-layered article comprising at least one layer (b) comprising polar polymers selected from polyamide (PA), poly(vinyl alcohol) copolymers (PVOH), ethylene vinyl alcohol copolymers (EVOH) or blends thereof and at least one layer (a) comprising a polypropylene composition comprising

(A) a propylene copolymer, wherein component (A) has a MFR (230°C, 2.16 kg) equal or more than 10 g/10 min; and

(B) a propylene homo- or copolymer including at least one polar monomer in an amount of 1 to 30 wt% of the polypropylene composition, wherein component (B) has a MFR (190°C, 2.16 kg) of 300 g/10 min to 1000 g/10 min.

2. The multi-layered article of claim 1 wherein component (A) has a density of 880 to 930 kg/m³.

3. The multi-layered article of claims 1 or 2 wherein component (A) is a propylene random copolymer.

4. The multi-layered article of claim 3 wherein the propylene random copolymer has an amount of comonomer units of 0.1 to 10.0 wt%.

5. The multi-layered article of claims 3 or 4 wherein the comonomer units are selected from the group consisting of ethylene and alpha-olefins having from 4 to 12 carbon atoms.

6. The multi-layered article of claims 1 or 2 wherein component (A) is a heterophasic propylene copolymer comprising a propylene homo- or copolymer matrix phase and an elastomeric ethylene-propylene phase dispersed in the matrix phase.

7. The multi-layered article of claim 6 wherein the heterophasic propylene copolymer has an amount of xylene cold solubles of 5 to 30 wt%.

8. The multi-layered article of claims 6 or 7 wherein the heterophasic propylene copolymer has an amount of ethylene comonomer units of 5 to 30 wt%.

9. The multi-layered article of any of the preceding claims wherein component (B) has an amount of polar monomer units of 0.2 to 10 wt%.

10. The multi-layered article of any of the preceding claims wherein the polar monomer in component (B) is maleic anhydride.

11. The multi-layered article of any of the preceding claims wherein the polymer comprised in the at least one layer (b) is selected from polyamide-6 (PA-6), polyamide-6-6 (PA-66), polyamide-12 (PA-12), poly-m-xylylene adipamide (nylon MXD6), poly-m-xylylene pimelamide (nylon MXD7), poly(vinyl alcohol copolymers (PVOH), ethylene vinyl alcohol copolymers (EVOH) or blends thereof.

12. The multi-layered article of any of the preceding claims comprising two layers (a) sandwiching layer (b).

13. The multi-layered article of any of claims 1 to 11 comprising a layer (c) comprising a polypropylene composition which differs from the polypropylene composition of layer (a) whereby layers (a) and (c) sandwich layer (b).

14. A process for the production of the multi-layered article of any of the preceding claims by means of injection moulding, injection blow moulding or injection stretch blow moulding.

**Patentansprüche**

1. Mehrschichtiger Artikel, umfassend mindestens eine Schicht (b), welche polare Polymere, ausgewählt aus Polyamid (PA), Polyvinylalkohol-Copolymeren (PVOH), Ethylen-Vinylalkohol-Copolymeren (EVOH) oder Mischungen davon, umfasst und mindestens eine Schicht (a), welche eine Polypropylenzusammensetzung umfasst, die

(A) ein Propylen-Copolymer umfasst, wobei Komponente (A) einen MFR (230 °C, 2,16 kg) von größer oder gleich 10 g/10 min aufweist; und

(B) ein Propylen-Homo- oder Copolymer umfasst, das mindestens ein polares Monomer in einer Menge von 1 bis 30 Gewichts-% der Polypropylenzusammensetzung enthält, wobei Komponente (B) einen MFR (190 °C, 2,16 kg) von 300 g/10 min bis 1000 g/10 min aufweist.

2. Mehrschichtiger Artikel nach Anspruch 1, wobei Komponente (A) eine Dichte von 880 bis 930 kg/m³ aufweist.

3. Mehrschichtiger Artikel nach den Ansprüchen 1 oder 2, wobei Komponente (A) ein statistisches Propylen-Copolymer ist.

4. Mehrschichtiger Artikel nach Anspruch 3, wobei das statistische Propylen-Copolymer eine Menge an Comonomer-Einheiten von 0,1 bis 10,0 Gewichts-% aufweist.

5. Mehrschichtiger Artikel nach Anspruch 3 oder 4, wobei die Comonomer-Einheiten aus der Gruppe, bestehend aus Ethylen und Alpha-Olefinen mit 4 bis 12 Kohlenstoffatomen, ausgewählt sind.

6. Mehrschichtiger Artikel nach den Ansprüchen 1 oder 2, wobei Komponente (A) ein heterophasisches Propylen-Copolymer ist, welches eine Propylen-Homo- oder Copolymer-Matrixphase und eine elastomere Ethylen-Propylen-Phase, die in der Matrixphase dispergiert ist, umfasst.

7. Mehrschichtiger Artikel nach Anspruch 6, wobei das heterophasische Propylen-Copolymer eine Menge an in Xylol kalt löslichen Anteilen von 5 bis 30 Gewichts-% aufweist.

8. Mehrschichtiger Artikel nach den Ansprüchen 6 oder 7, wobei das heterophasische Propylen-Copolymer eine Menge an Ethylen-Comonomer-Einheiten von 5 bis 30 Gewichts-% aufweist.

9. Mehrschichtiger Artikel nach einem der vorhergehenden Ansprüche, wobei Komponente (B) eine Menge an polaren Monomer-Einheiten von 0,2 bis 10 Gewichts-% aufweist.

10. Mehrschichtiger Artikel nach einem der vorhergehenden Ansprüche, wobei das polare Monomer in der Komponente (B) Maleinsäureanhydrid ist.

11. Mehrschichtiger Artikel nach einem der vorhergehenden Ansprüche, wobei das Polymer, das in der mindestens einen Schicht (b) enthalten ist, ausgewählt wird aus Polyamid-6 (PA-6), Polyamid-6-6 (PA-66), Polyamid-12 (PA-12), Poly(m-xylol-adipinamid) (Nylon MXD6), Poly(m-xylol-pimelamid) (Nylon MXD7), Polyvinylalkohol-Copolymeren (PVOH), Ethylen-Vinylalkohol-Copolymeren (EVOH) oder Mischungen davon.

12. Mehrschichtiger Artikel nach einem der vorhergehenden Ansprüche, umfassend zwei Schichten (a), welche Schicht (b) sandwichartig umgeben.

13. Mehrschichtiger Artikel nach einem der Ansprüche 1 bis 11, umfassend eine Schicht (c), welche eine Polypropylenzusammensetzung umfasst, die sich von der Polypropylenzusammensetzung von Schicht (a) unterscheidet, wobei die Schichten (a) und (c) Schicht (b) sandwichartig umgeben.

14. Verfahren zur Herstellung des mehrschichtigen Artikels nach einem der vorangehenden Ansprüche durch Spritzgießen, Spritzblasen oder Spritzstreckblasen.


**Revendications**

1. Article multicouche comprenant au moins une couche (b) comprenant des polymères polaires choisis parmi le polyamide (PA), des copolymères d'alcool polyvinylique (PVOH), des copolymères d'éthylène-alcool vinylique (EVOH) ou des mélanges de ceux-ci et au moins une couche (a) comprenant une composition de polypropylène comprenant

   (A) un copolymère de propylène, le composant (A) ayant un MFR (230 °C, 2,16 kg) égal ou supérieur à 10 g/10 min ; et
   (B) un homo- ou copolymère de propylène comprenant au moins un monomère polaire en une quantité allant de 1 à 30 % en poids de la composition de polypropylène, le composant (B) ayant un MFR (190 °C, 2,16 kg) de 300 g/10 min à 1000 g/10 min.

2. Article multicouche de la revendication 1 dans lequel le composant (A) a une masse volumique de 880 à 930 kg/m$^3$.

3. Article multicouche des revendications 1 ou 2 dans lequel le composant (A) est un copolymère statistique de propylène.

**4.** Article multicouche de la revendication 3 dans lequel le copolymère statistique de propylène a une quantité de motifs de comonomère de 0,1 à 10,0 % en poids.

**5.** Article multicouche des revendications 3 ou 4 dans lequel les motifs de comonomère sont choisis dans le groupe constitué de l'éthylène et d'alpha-oléfines ayant de 4 à 12 atomes de carbone.

**6.** Article multicouche des revendications 1 ou 2 dans lequel le composant (A) est un copolymère de propylène hétérophasique comprenant une phase de matrice d'homo- ou copolymère de propylène et une phase d'éthylène-propylène élastomère dispersée dans la phase de matrice.

**7.** Article multicouche de la revendication 6 dans lequel le copolymère de propylène hétérophasique a une teneur en soluble dans le xylène à froid de 5 à 30 % en poids.

**8.** Article multicouche des revendications 6 ou 7 dans lequel le copolymère de propylène hétérophasique a une teneur en motifs de monomère d'éthylène de 5 à 30 % en poids.

**9.** Article multicouche de l'une quelconque des revendications précédentes dans lequel le composant (B) a une teneur en motifs de monomère polaire de 0,2 à 10 % en poids.

**10.** Article multicouche de l'une quelconque des revendications précédentes dans lequel le monomère polaire dans le composant (B) est l'anhydride maléique.

**11.** Article multicouche de l'une quelconque des revendications précédentes dans lequel le polymère compris dans l'au moins une couche (B) est choisi parmi le polyamide-6 (PA-6), le polyamide-6-6 (PA-66), le polyamide-12 (PA-12), le poly-m-xylylène-adipamide (nylon MXD6), le poly-m-xylylène-pimelamide (nylon MXD7), des copolymères d'alcool polyvinylique (PVOH), des copolymères d'éthylène-alcool vinylique (EVOH) ou des mélanges de ceux-ci.

**12.** Article multicouche de l'une quelconque des revendications précédentes comprenant deux couches (a) entre lesquelles est intercalée la couche (b).

**13.** Article multicouche de l'une quelconque des revendications 1 à 11 comprenant une couche (c) comprenant une composition de polypropylène qui diffère de la composition de polypropylène de la couche (a) de telle manière qu'entre les couches (a) et (c) est intercalée la couche (b).

**14.** Procédé de production de l'article multicouche de l'une quelconque des revendications précédentes moyen d'un moulage par injection, un moulage par injection-soufflage ou un moulage par injection-étirage-soufflage.

**EP 2 483 350 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000143908 A
- JP 2004082499 A
- EP 115163 A
- WO 0063085 A
- WO 9622328 A
- WO 02059196 A
- EP 0887379 A1
- WO 9212182 A
- WO 2004000899 A
- WO 2004111095 A
- WO 9924478 A
- WO 9924479 A
- WO 0068315 A

### Non-patent literature cited in the description

- **GUGGENHEIM, E.A.** *Trans. Faraday Soc.,* 1951, vol. 47, 573